# EUROPEAN PATENT APPLICATION

(11) **EP 2 980 443 A1**
(43) Date of publication of application: **03.02.2016**
(21) Application number: 13880324.2
(22) Date of filing: 27.09.2013
(51) Int. Cl.: F16F 15/02, H01L 41/113, H01L 41/193

(54) **COMPOSITE DAMPING MATERIAL**

(30) Priority: 27.03.2013 JP 2013067226
(71) Applicant: Kiso Industry Co. Ltd, Nagoya-shi, Aichi 460-8411 (JP)
(72) Inventor: SUMITA, Masao, Ayase-shi Kanagawa 252-1127 (JP); KANEKO, Hajime, Tokyo 145-0063 (JP); MURASE, Kazutaka, Tokyo 105-0001 (JP)
(74) Representative: Körber, Martin Hans
(86) International application number: PCT/JP2013/076310
(87) International publication number: WO 2014/155786

(57) **Abstract**

Provided is a damping material capable of exhibiting a damping effect more effective than that of a conventional technique. A composite damping material (1) of the present invention is a material in which a needle-like dielectric having a high dielectric constant (3) made of a titanium dioxide and a piezoelectric fiber (4) made of an organic material are mixed in a polymer material (2) serving as a matrix, and preferably a material inwhicha flat filler (5) made of an inorganic material and conductive fine particles (6) are further mixed. A material made of a cellulose fiber can be used preferably as the piezoelectric fiber (4).

## Description

### Technical Field

The present invention relates to a damping material for converting vibration energy into electrical energy to attenuate vibration, and in particular, relates to a composite damping material utilized for equipment anti-vibration, noise absorption, and the like.

### Background Art

Recently, in the development of industrial machines and transportation, and the spread of home appliances, vibration and noise generated by various kinds of equipment have come to be viewed as a problem from the viewpoint of health management or environmental preservation. For example, vibration and noise increased by the speed increase of transportation, in particular, a railway; vibration and noise of a vehicle such as a car on a highway or a bridge; and vibration, in particular, low frequency vibration increased by the spread of various kinds of precision machines such as an audio instrument or a personal computer, have become problems, and countermeasures for prevention and reduction thereof have become indispensable for a future society.

Conventionally, for preventing the vibration and the noise, the following three points are considered to be important: (1) increasing mass to improve stiffness; (2) avoiding resonance; and (3) attenuating vibration (refer to "new material handbook" Maruzen, p. 235).

While the above points (1) and (2) relate to a stiff structure design for causing vibration not to occur, the above point (3) relates to a flexible structure and employs an idea that it is preferable to allow vibration to occur freely and to attenuate the vibration quickly afterward. For such vibration attenuation, there is proposed and implemented a method of reducing the amplitude rapidly to stop the vibration by converting the vibration energy of a vibrated body into heat to consume the energy. In particular, there have been developed various kinds of damping materials, each utilizing the attenuation ability of the material itself.

Among these materials, there is proposed an organic polymer-based damping material in which a low molecular weight compound having a piezoelectric property, a dielectric property, and a conductive property is diffused into a non-piezoelectric organic polymer matrix, for example. The effect of such a damping material has a principle different from the principle of the conventional damping effect and attenuates the vibration by converting the vibration energy first into electric energy and then into thermal energy for consumption, and, since electric energy loss caused by a piezoelectricity-conductivity effect is added, the effect enables a more effective vibration attenuation (refer to Patent Literature 1 and Patent Literature 2, for example).

Meanwhile, a more effective damping effect is desired in a case such as the case of performing a fine process in a semiconductor manufacturing apparatus or the like, for example, and the research and development of the damping material is progressing in various technical fields (refer to Patent Literature 3, for example).

Moreover, recently, as means of performing damping in the case of an earthquake, it is desired to obtain a more effective damping effect using a simple configuration and also using a small amount of material.

### Citation List

### Patent Literature

PTL 1: Japanese Patent Laid-Open Publication No. 06-85346
PTL 2 : Japanese Patent Laid-Open Publication No. 11-68190
PTL 3: Japanese Patent Laid-Open Publication No. 2011-99497

### Disclosure of the Invention

### Problems to be Solved by the Invention

The present invention has been achieved in consideration of the problems of the conventional techniques discussed above, and an object thereof is to provide a composite damping material capable of exhibiting a more effective damping effect in a low frequency range.

### Means for Solving the Problems

After a long diligent study for achieving the above obj ect, the inventors have found that a very effective damping material is obtained for a low frequency vibration, particularly when a needle-like dielectric having a high dielectric constant and a piezoelectric fiber made of an organic material are mixed into a polymer material which serves as a matrix, and have achieved the present invention.

The present invention achieved based on such finding is a composite damping material comprising a needle-like dielectric having a high dielectric constant, a piezoelectric fiber made of an organic material, and a polymer material serving as a matrix, wherein the needle-like dielectric and the piezoelectric fiber are mixed in the polymer material.

Further, the present invention is a composite damping material comprising a needle-like dielectric having a high dielectric constant, a piezoelectric fiber made of an organic material, a flat filler made of an inorganic material, conductive fine particles, and a polymer material serving as matrix, wherein the needle-like dielectric, the piezoelectric fiber, the flat filler, and the conductive fine particles are mixed in the polymer material.

The present invention is also effective in a case that the needle-like dielectric is made of titanium dioxide.

The present invention is also effective in a case that the needle-like dielectric comprises a needle-like core made of titanium dioxide, and a conductive material layer provided on a surface of the needle-like core.

The present invention is also effective in a case that the piezoelectric fiber is made of a cellulose fiber.

### Effect of the Invention

According to the present invention, it is possible to provide a damping material capable of exhibiting a more effective damping effect in a low frequency range.

### Brief Description of the Drawings

FIG. 1 is a cross-sectional schematic diagram to show an outline configuration of a composite damping material of the present invention.
FIG. 2 (a) isa schematic diagram to show a size relationship of a needle-like dielectric used in the present invention, FIG. 2(b) is a cross-sectional diagram to show a configuration of a needle-like dielectric in which a conductive material layer is provided on the surface of a titanium dioxide, and FIG. 2 (c) is a schematic diagram to show a size relationship of a piezoelectric fiber used in the present invention.
FIG. 3 is a cross-sectional schematic diagram to show an electric charge generation state when vibration is applied to a composite damping material of the present invention.
FIGS. 4(a) to 4(c) are schematic diagrams to show a principle of the present invention.
FIG. 5 is a graph to show a relationship between a frequency and a loss coefficient in each of example 1 and comparative examples 1 and 2 (center exciting method: JIS K 7391).
FIG. 6 is a graph to show a relationship between temperature and a loss tangent in each of example 1 and comparative examples 1 and 2 (dynamic viscoelasticity measurement, frequency: 0.2 Hz).
FIG. 7 is a graph to show a relationshipbetween temperature and a loss tangent in each of example 1 and comparative examples 1 and 2 (dynamic viscoelesticity measurement, frequency: 1 Hz).
FIG. 8 is a graph to show a relationship between temperature and a loss tangent in each of example 1 and comparative examples 1 and 2 (dynamic viscoelesticity measurement, frequency: 6 Hz).
FIG. 9 is a graph to show a relationship between a frequency and a dielectric constant in each of example 1 and comparative examples 1 and 2.
FIG. 10 is a graph to show a relationship between a frequency and a dielectric loss factor in each of example 1 and comparative examples 1 and 2.
FIG. 11 is a graph to show a relationship between a frequency and a loss coefficient in each of examples 2 to 4 and comparative example 3 (center exciting method).

### Best Modes for Carrying Out the Invention

Hereinafter, a preferable embodiment of the present invention will be explained in detail with reference to the drawings.

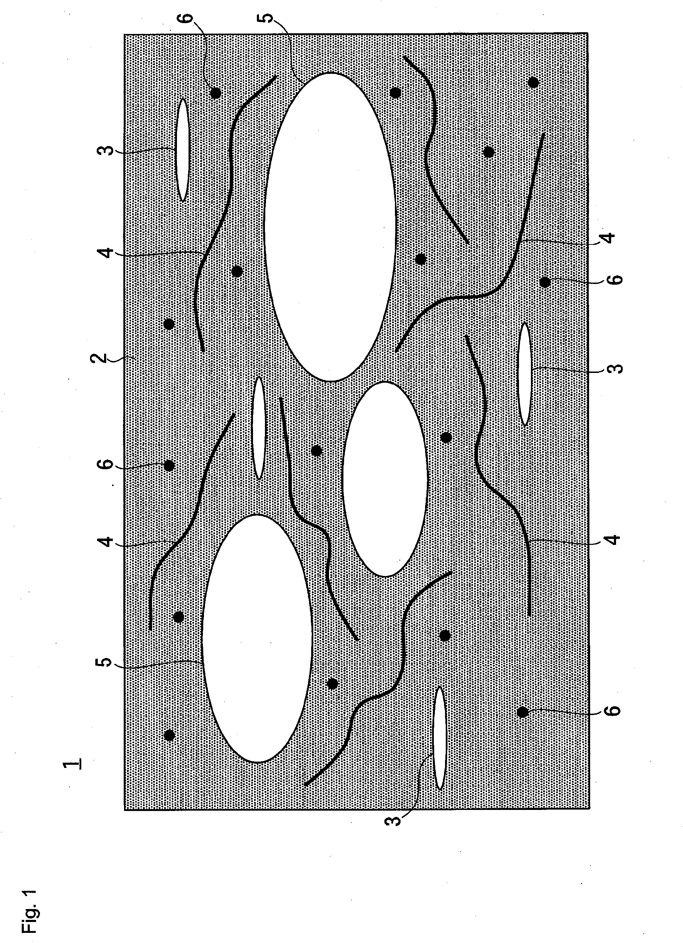

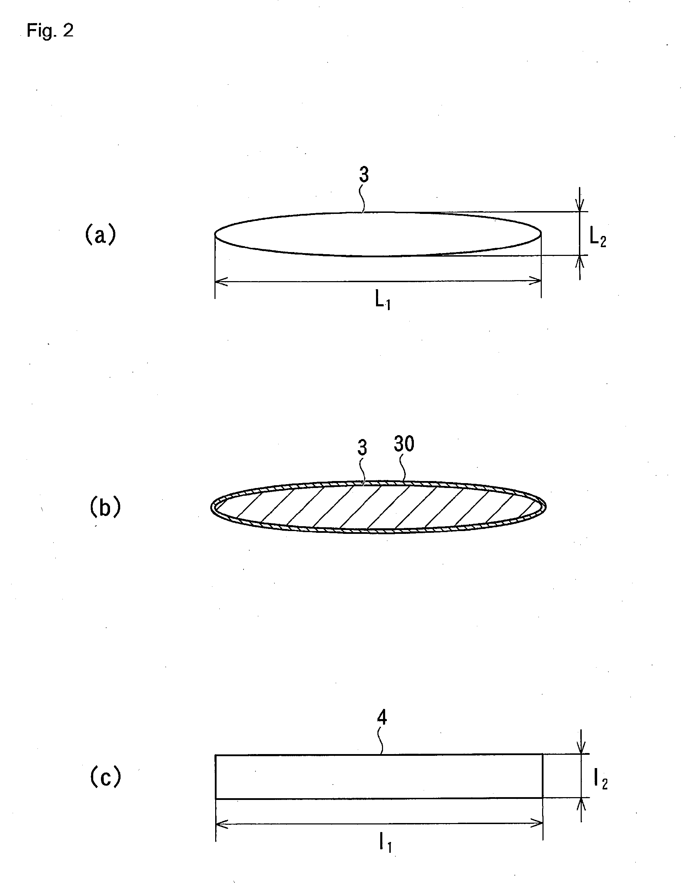

FIG. 1 is a cross-sectional schematic diagram to show an outline configuration of a composite damping material of the present invention. Further, FIG. 2 (a) isa schematic diagram to show a size relationship of a needle-like dielectric used in the present invention. FIG. 2 (b) is a cross-sectional diagram to show a configuration of a needle-like dielectric in which a conductive material layer is provided on the surface of a titanium dioxide, and FIG. 2 (c) is a schematic diagram to show a size relationship of a piezoelectric fiber used in the present invention.

As shown in FIG. 1, a composite damping material 1 of the present invention includes a needle-like dielectric having a high dielectric constant 3 and a piezoelectric fiber 4 made of an organic material mixed into a polymer material 2 serving as a matrix, and preferably further includes a flat filler 5 made of an inorganic material and conductive fine particles 6 mixed into the polymer material 2.

In the case of the present invention, the polymer material 2 serving as a matrix is not limited in particular, and it is possible to use various elastomers or polymer resins.

Examples of the elastomer used in the present invention include, for example, acryl rubber (ACR), butyl rubber (IIR), acrylonitrile-butadiene rubber (NBR), acrylonitrile-butadiene rubber blended with vinyl chloride resin (NBR/PVC), styrene-butadiene rubber (SBR), butadiene rubber (BR), natural rubber (NR), isoprene rubber (IR), butyl rubber (IIR), ethylene propylene rubber (EPM), chloroprene rubber (CR), and the like.

Among these materials, from the viewpoint of improving weather resistance and abrasive resistance, it is preferable to use the acrylonitrile-butadiene rubber blended with vinyl chloride resin (NBR/PVC).

Meanwhile, examples of the polymer resin used in the present invention include, for example, polylactic resin, polyurethane resin, acrylate resin, epoxy resin, polypropylene resin, polycarbonate resin, polyester resin, polyether resin, vinyl acetate resin, polymethylmethacrylate resin, polyvinylidene fluoride resin, polystyrene resin, ethylene-vinyl acetate copolymer, ethylene-vinylchloride copolymer, ethylene-methacrylate copolymer, acrylonitrile-styrene copolymer, acrylonitrile-butadiene-styrene copolymer, chlorinated polyethylene, chlorinated polypropylene, chlorinated polybutylene, and the like.

The needle-like dielectric having a high dielectric constant (in the following, called a "needle-like dielectric") 3 used in the present invention is configured with a needle-like titanium dioxide (triO₂), for example. Here, as a crystalline state of the titanium dioxide, it is preferable to use a rutile type.

In the present specification, "needle-like" means a shape having the length L₁ of the long axis longer than the diameter L₂ of the short axis as shown in FIG. 2(a), and has the same meaning as spindle-like and rod-like.

Here, for the needle-like dielectric 3, it is preferable to set the aspect ratio, that is, a ratio of the long axis length L₁ and the short axis diameter L₂ (L₁/L₂), to be from 10 to 30.

The aspect ratio of the needle-like dielectric 3 is preferably set to be as large (long and narrow) as possible from the viewpoint of making generated electric energy larger and causing a more effective damping effect to be exhibited in a low frequency range.

Note that it is difficult in practice to manufacture the needle-like dielectric 3 having an aspect ratio exceeding 30. On the other hand, when the aspect ratio of the needle-like dielectric 3 is less than 10, sufficient electric energy cannot be generated.

This needle-like dielectric 3, while details are not clear, is considered to have a so-called mono-domain structure in which molecules are arranged in one direction by stress caused by pressure in particle manufacturing or pressure in mixing (kneading and mixing) into the polymer material 2, for example.

Further, the needle-like dielectric 3 is considered to have a molecular arrangement structure in which a piezoelectric effect is exhibited and further the generated electric energy easily flows along the longitudinal direction of the particles.

In the present invention, as shown in FIG. 2(b), a conductive material layer 30 can be provided on the surface of the titanium dioxide using the titanium dioxide as a core in the needle-like dielectric 3.

By providing the conductive material layer 30 on the surface of the titanium dioxide in the needle-like dielectric 3, it is possible to increase the amount of current flowing on the surface of the needle-like dielectric 3, and therefore it is possible to perform a more effective damping using a smaller amount of the needle-like dielectric 3.

In the case of the present invention, while the material of the conductive material layer 30 is not limited in particular, it is possible preferably to use tin dioxide (SnO₂) doped with antimony (Sb) from the viewpoint of manufacturing easiness and conductivity improvement at a smaller amount.

In this case, the thickness of the conductive material layer 30 is preferably set to be 1 to 20 µ m in the case of printing.

On the other hand, in the case of evaporation, the thickness of the conductive material layer 30 can be set to be 0.1 to 100 µm.

Meanwhile, the resistivity of the needle-like dielectric 3 (including also the needle-like dielectric on which the conductive material layer 30 is formed) of the present invention is preferably 2 to 80 Ω·cm, and more preferably 10 to 60 Ω ·cm.

While the piezoelectric fiber 4 made of an organic material used in the present invention is not limited in particular, a piezoelectric fiber made of cellulose can be used preferably, for example.

For this piezoelectric fiber 4, a fiber having a small aspect ratio (cellulose powder) can be used in addition to a fiber having a large aspect ratio (cellulose fiber).

Cellulose made of wood is known to have piezoelectricity, and also the cellulose fiber (powder) used in the present invention has piezoelectricity.

For the piezoelectric fiber 4, it is preferable to use a fiber-like material having an aspect ratio, that is, the ratio of the long axis length l₁ and the short axis length l₂ (l₁/l₂) (refer to FIG. 2(c)), as large (long and narrow) as possible from the viewpoint of increasing the electric energy generated by an electric dipole and causing a more effective damping effect in a low frequency range.

Note that, considering that it is difficult to manufacture a piezoelectric fiber having an aspect ratio exceeding 10, it is preferable to use the piezoelectric fiber 4 having an aspect ratio of 2 to 10.

In the case of the present invention, the mixing amount of the needle-like dielectric 3 in the composite dampingmaterial 1, while not limited in particular, is preferably set to be 3 wt % to 7 wt %. When the mixing amount of the needle-like dielectric 3 is less than 3 wt %, the composite damping material 1 cannot exhibit a sufficient damping effect, and, on the other hand, the mixing amount exceeding 7 wt % is not preferable because the composite damping material 1 becomes fragile after formation.

Meanwhile, the mixing amount of the piezoelectric fiber 4 made of organic material in the composite damping material 1, while not limited in particular, is preferably set to be 4 wt % to 10 wt %, and more preferably set to be 8 wt % to 10 wt %.

When the mixing amount of the piezoelectric fiber 4 made of organic material is less than 4 wt %, the composite damping material 1 cannot exhibit a sufficient damping effect, and, on the other hand, the mixing amount exceeding 10 wt % is not preferable because it is difficult to disperse the piezoelectric fibers 4 uniformly.

In the present invention, the flat filler 5 made of inorganic material and the conductive fine particles 6 can be mixed as needed.

The flat filler 5 made of inorganic material used in the present invention improves the damping ability and also provides a desired mechanical property (elasticity and the like) of the whole composite material.

A filler made of a layered mica can be preferably used as the flat filler 5, for example.

In the case of the present invention, the mixing amount of the filler 5 made of an inorganic material, while not limited in particular, is preferably set to be 10 wt % to 30 wt % in consideration of the above purpose.

The conductive fine particles 6 used in the present invention are a material for improving and adjusting conductivity of the whole composite material.

As the conductive fine particles 6 like this, it is possible to preferably use conductive fine particles made of carbon black, for example.

Note that conductive fine particles added preliminarily to the polymer material 2 can be used as the conductive fine particles 6.

In the case of the present invention, the mixing amount of the conductive fine particles 6 in the composite damping material 1, while not limited in particular, is preferably set to be 5 wt % to 20 wt % in consideration of the above purpose.

A usual method may be used for obtaining the composite damping material 1 and a compact thereof according to the present invention.

That is, the above needle-like dielectric 3 and the piezoelectric fiber 4 made of an organicmaterial, and, as needed, the flat filler 5 made of an inorganic material and the conductive fine particles 6 are added to the polymer material 2 for the matrix in predetermined amounts, kneaded and mixed at a predetermined temperature, and cut into a predetermined size after roll press forming, for example.

The composite damping material 1 of the present invention can be used as a compact having various shapes.

For example, the composite damping material 1 can be used as compacts having various shapes such a disk shape, a cylindrical shape, a rectangular shape, a polyhedron shape, and a spherical shape, in addition to a film compact.

Further, the composite damping material 1 can be formed in a fiber shape to be used as a fabric and also can be used as a non-woven fabric.

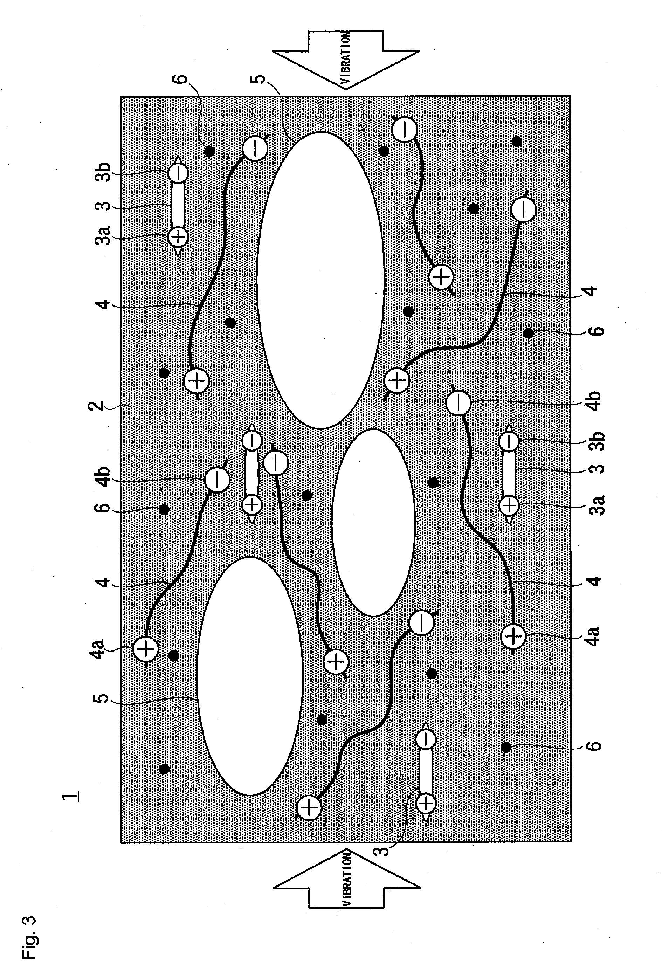

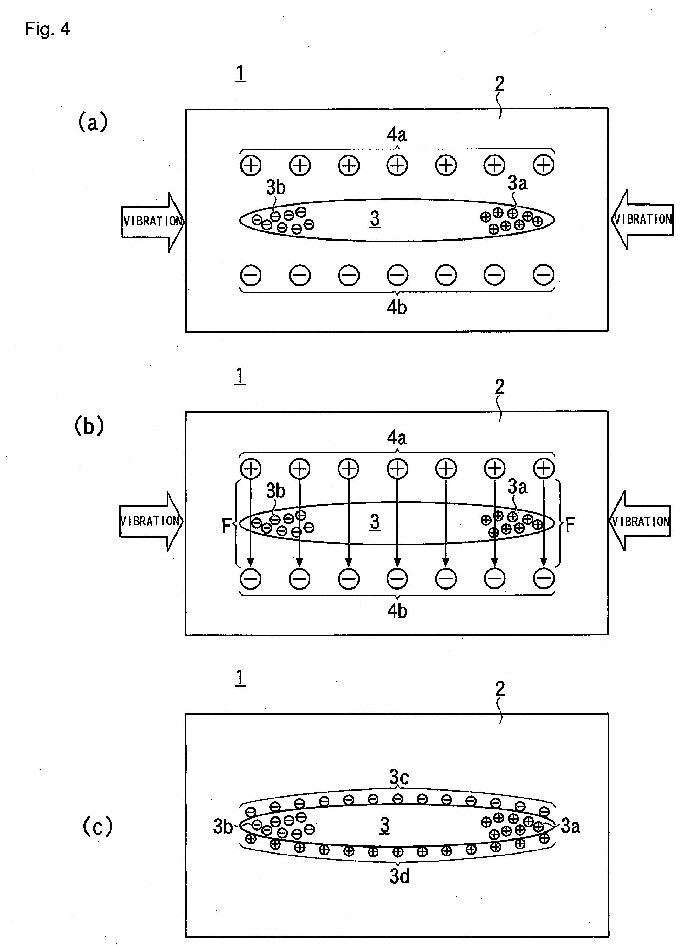

FIG. 3 is a cross-sectional schematic diagram to show an electric charge generation state when vibration is applied to the composite damping material of the present invention, and FIGS. 4(a) to 4(c) are schematic diagrams to show the principle of the present invention.

When periodic vibration is applied to the composite damping material 1 of the present invention, interlayer shift is caused in the flat filler 5 made of an inorganic material in the polymer material 2 by the vibration energy thereof, and heat is generated by this mechanical effect to absorb the vibration.

Moreover, in the present invention, as shown in FIG. 3, a potential difference is caused periodically across both end parts of the piezoelectric fiber 4 in the polymer material 2 by the piezoelectric effect thereof (electric dipole 4a and 4b).

In this case, as the aspect ratio of the piezoelectric fiber 4 becomes larger, the electric dipole 4a and 4b generated in the piezoelectric fiber 4 come to have a larger value.

Then, AC current caused by the electric dipole 4a and 4b generated in a large number of piezoelectric fibers 4 flows in conductive paths within the composite material (compound), and electric energy of this AC current is consumed into Joule heat and the vibration energy in the composite damping material 1 is attenuated.

Meanwhile, a potential difference is also caused periodically across both end parts of the needle-like dielectric 3 by the piezoelectric effect thereof (electric dipole 3a and 3b).

In addition, in the present invention, as shown in FIG. 4(a), since the above electric dipole 4a and 4b generated in the the piezoelectric fiber 4 exists in the vicinity of the needle-like dielectric 3, the needle-like dielectric 3 is displaced in an electric field F generated by the electric dipole 4a and 4b as shown in FIG. 4(b).

Thereby, as shown in FIG. 4(c), electric dipole 3c and 3d is generated by interfacial polarization at the interface between the needle-like dielectric 3 and the polymer material 2.

Then, an electrical circuit is formed on the surface of the needle-like dielectric 3 by the electric dipole 3a and 3d and the electric dipole 3b and 3c generated in the needle-like dielectric 3, and AC current flows on the surface of the needle-like dielectric 3.

As a result, the electric energy of this AC current on the surface of the needle-like dielectric 3 is consumed into Joule heat, and the vibration energy in the composite damping material 1 is attenuated.

Generally, in the case that the resistance of a piezoelectric composite material in which particles having piezoelectricity are mixed is defined as R, the capacitance of the piezoelectric particles is defined as C, and the vibration frequency of vibration to be attenuated is defined as ω, it is known that the vibration is attenuated most rapidly when the condition of R = 1/ωC holds as an impedance matching condition.

Accordingly, in the present invention, it is possible to obtain a desired damping effect by setting an appropriate conductivity corresponding to the natural frequency of the composite damping material 1.

As described above, in the case of the present invention, the electric dipole 3a and 3b is generated in the needle-like dielectric 3 by the piezoelectric effect thereof when vibration is applied, and the electric dipole 3c and 3d is generated by the electric dipole 4a and 4b generated in the piezoelectric fiber 4, and thereby a large current flows on the conductive surface of the needle-like dielectric 3 caused by both of the electric dipoles 3a to 3d, this electric energy is consumed into Joule heat in a large amount, and the vibration is absorbed.

In this manner, according to the present invention, it is possible to exhibit a damping effect more effectively than that of the conventional technique by attenuating the vibration energy by a synergy effect of the electrical dipoles 3a to 3d of the piezoelectric fiber 4 and the needle-like dielectric 3.

Moreover, since the needle-like shape causes the electric dipole to be generated by the interfacial polarization at a low frequency (less than 500 Hz) (refer to Japanese Patent Laid-Open Publication No. 10-312191, for example), according to the present invention, it is possible to provide a composite damping material to perform the vibration damping in the most appropriate condition for equipment and the like which vibrate at a low frequency.

Furthermore, when the flat filler 5 made of an inorganic material is mixed, a more effective damping effect can be exhibited by the vibration energy attenuation performed by the mechanical effect of this flat filler 5 made of an inorganic material, together with the vibration energy attenuation performed by the synergy effect of the above electrical dipoles 3a to 3d of the piezoelectric fiber 4 and the needle-like dielectric 3, and it is further possible to improve and adjust the conductivity of the whole composite material by mixing the conductive fine particles 6.

### Examples

While the present invention will be explained according to examples in the following, the present invention is not limited to the examples.

### 1. Damping effect by the needle-like dielectric having a high dielectric constant and the piezoelectric fiber made of an organic material

### <Example 1>

A composite damping material sample in example 1 was prepared by the use of following materials.

Acrylonitrile-butadiene rubber blended with vinyl chloride resin (NBR/PVC, product name: NBRPVC601A manufactured by INB Planning Co., Ltd.) was used as the polymer material for the matrix.

Conductive particles made of carbon black were added to this polymer material.

Needle-like titanium dioxide fine particles having a conductive material layer (product name: FT-4000 manufactured by ISHIHARA SANGYO KAISHA, LTD., long axis length: 10µm, short axis diameter: 0.5µm, aspect ratio: 20) were used as the needle-like dielectric having a high dielectric constant.

A cellulose fiber having an aspect ratio of 2.11 (product name: Solka Flock #100 manufactured by IMAZU CHEMICAL CO., LTD., long axis length: 40µm, short axis diameter: 19µm) was used as the piezoelectric fiber made of an organic material.

A layered mica (product name: Kula light mica manufactured by Kuraray Co., Ltd.) was used as the flat filler.

This layered mica is included in an organic composite material for providing damping at a certain mixing ratio together with a processing aid.

43.8 wt % of the organic composite material for providing damping (21.5 wt % of the layered mica is included therein), 3.1 wt % of the needle-like titanium dioxide fine particles, 4.3 wt % of the cellulose fiber, 1.4 wt % of a cross-linking agent were added to 47.4 wt % of NBR/PVC (14.2 wt % of the conductive fine particles are included therein) and kneaded and mixed at a temperature of 140°C, and a test film was obtained after the heat roll press forming; said test film was cut into a size of 10 mm x 200 mm and had a thickness of 1 mm.

This example 1 includes both of the needle-like titanium dioxide fine particles and the cellulose fiber in the polymer material serving as the matrix.

### <Comparative example 1>

47.3 wt % of the organic composite material for providing damping (23.3 wt % of the layered mica is included therein), and 1.5 wt % of the cross-linking agent were added to 51.2 wt % of NBR/PVC (15.0 wt % of the conductive fine particles are included therein), and a damping material sample was prepared under the same conditions as in example 1.

This comparative example 1 does not include either of the needle-like titanium dioxide fine particles or the cellulose fiber in the polymer material serving as the matrix.

### <Comparative example 2>

45.7 wt % of the organic composite material for providing damping (22.5 wt % of the layered mica included therein), 3.3 wt % of the needle-like titanium dioxide fine particles, and 1.5 wt % of the cross-linking agent were added to 49.5 wt % of NBR/PVC (14.9 wt % of the conductive fine particles included therein), and a damping material sample was prepared under the same conditions as in example 1.

This comparative example 2 includes only the needle-like titanium dioxide fine particles but does not include the cellulose fiber in the polymer material serving as the matrix.

### <<Loss coefficient measurement by a center exciting method>>

For the samples of example 1 and comparative examples 1 and 2, the frequency dependence of a loss coefficient was measured by a center exciting method (steel plate of 10 x 200 x 0.8 mm and 12.35 g).

As a measurement system, a system configured with a oscillator of Type 2825, an amplifier of Type 2718, a vibrator of Type 4809, and an acceleration sensor of Type 8001 (all manufactured by B&K Co.) was used, and a personal computer was used to control each of the instruments.

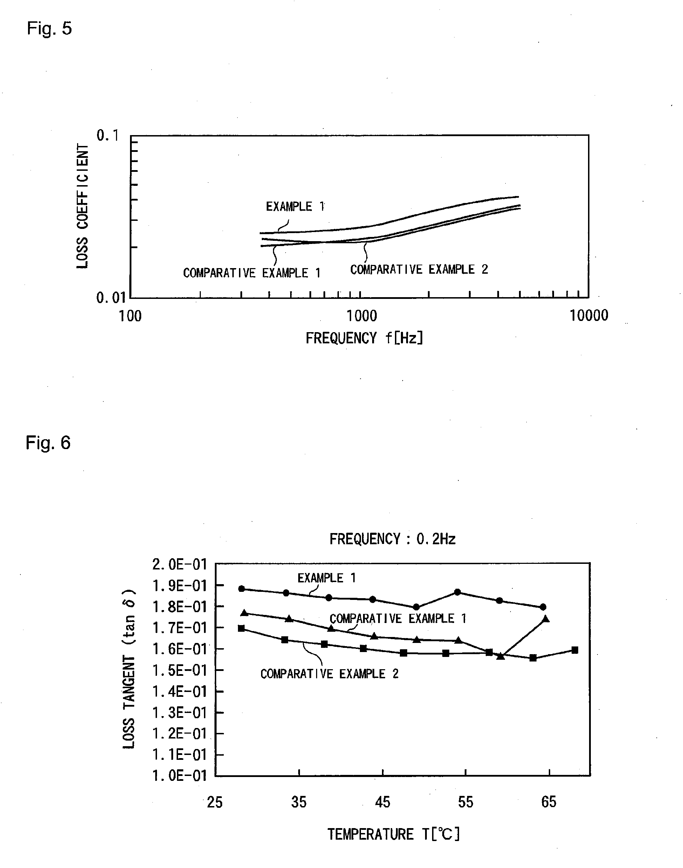

In this case, a resonant frequency was measured for the first order up to the seventh order. The result of this loss measurement is shown in FIG. 5.

### <<Loss tangent measurement by a dynamic viscoelasticity measurement>>

For the samples of example 1 and comparative examples 1 and 2, a loss tangent (tan δ) was measured at 30°C to 70°C by the use of a dynamic viscoelasticity measurement apparatus (DVA-200S manufacture by ITK Co. Ltd.).

In this case, vibration frequency was changed to 0.2 Hz, 1 Hz, and 6 Hz for the measurement.

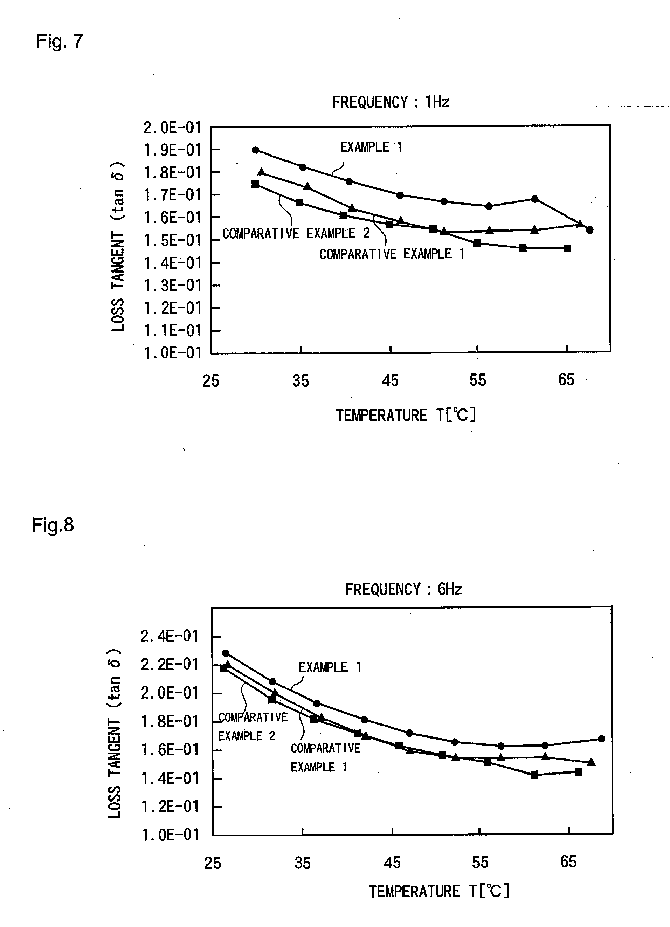

The results are shown in FIGS. 6 to 8.

### <<Dielectric constant and dielectric loss factor measurement by dielectric dispersion>>

For the samples of example 1 and comparative examples 1 and 2, the frequency dependences of a dielectric constant (e') and a dielectric loss factor (e") were measured by the use of the above dynamic viscoelasticity measurement apparatus.

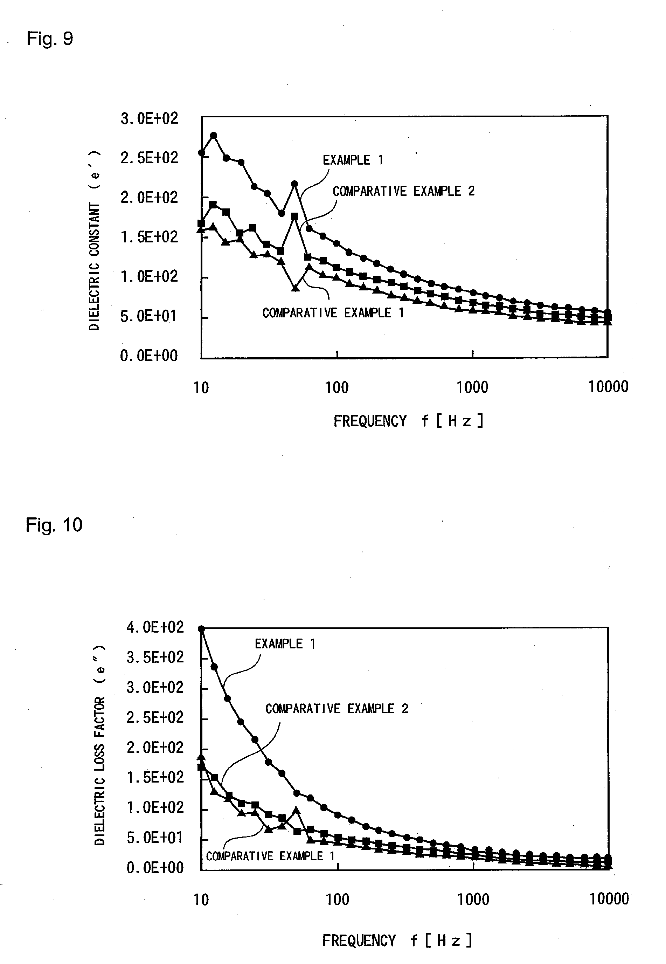

The results are shown in FIG. 9 and FIG. 10.

### <<Evaluation>>

In the result shown in FIG. 5 for the loss coefficient measurement by the center exciting method, example 1 (mixing both of the needle-like titanium dioxide fine particles and the cellulose fiber in the polymer material serving as the matrix) exhibits a clearly larger loss coefficient than comparative example 1 (not including either of the needle-like titanium dioxide fine particles or the cellulose fiber) and comparative example 2 (mixing only the needle-like titanium dioxide fine particles) in a frequency range of approximately 300 Hz to approximately 5000 Hz; and the synergy effect by the coexistence of the needle-like dielectric having a high dielectric constant and the piezoelectric fiber made of an organic material is clearly exhibited as a feature of the present invention.

Furthermore, in the graphs of loss tangent (tan δ)-temperature (T) change at frequencies of 0.2 Hz, 1 Hz, and 6 Hz by the dynamic viscoelasticity measurement shown in FIG. 6 to FIG. 8, example 1 (mixing both of the needle-like titanium dioxide fine particles and the cellulose fiber in the polymer material serving as the matrix) exhibits a clearly larger loss tangent than comparative example 1 (not including either of the needle-like titanium dioxide fine particles or the cellulose fiber) and comparative example 2 (mixing only the needle-like titanium dioxide fine particles) in a temperature range of 30°C to 70°C where the temperature dependence of the loss tangent becomes approximately constant; and the synergy effect by the coexistence of the needle-like dielectric having a high dielectric constant and the piezoelectric fiber made of an organic material is clearly exhibited also here as a feature of the present invention.

In this case, the differences of the loss tangent in example 1 from those in comparative example 1 and comparative example 2 change with respect to the frequency in the order of 0.2 Hz > 1 Hz > 6 Hz.

From this result, it is found that the present invention exhibits a larger damping effect in a lower frequency range.

Furthermore, it is clear that the present invention exhibits a larger damping effect in a lower frequency range, also from the result that the differences of the dielectric loss factor (e") in example 1 from those in comparative example 1 and comparative example 2 becomes larger as the frequency becomes lower in a low frequency range not higher than approximately 500 Hz in the graph of dielectric loss factor measurement shown in FIG. 10.

### 2. Aspect ratio dependence of the damping effect in the piezoelectric fiber

### <Example 2>

A composite damping material sample of example 2 was prepared by the use of the following materials.

The acrylonitrile-butadiene rubber blended with vinyl chloride resin (NBR/PVC, product name: NBRPVC601A manufactured by INB Planning Co., Ltd.) was used as the polymer material for the matrix.

The conductive particles made of carbon black were added to this polymer material.

The needle-like titanium dioxide fine particles having a conductive material layer (product name: FT-4000 manufactured by ISHIHARA SANGYO KAISHA, LTD., long axis length: 10 µm, short axis diameter: 0.5 µm, aspect ratio: 20) was used as the needle-like dielectric having a high dielectric constant.

The cellulose fiber having an aspect ratio of 2.11 (product name: Solka Flock #100 manufactured by Imazu Chemical Co., Ltd., long axis length : 40 µm, short axis diameter: 19 µm) was used as the piezoelectric fiber made of an organic material.

The layered mica (product name: Kula light mica manufactured by Kuraray Co., Ltd.) was used as the flat filler.

3.1 wt % of the above needle-like titanium dioxide fine particles, 4.3 wt % of the cellulose fiber, 20 wt % of the mica, 20 wt % of the organic composite material for providing damping, 3.1 wt % of the processing aid, and 1.5 wt % of the cross-linking agent were added to 48 wt % of the above NBR/PVC (15 wt % of the conductive fine particles is included therein) and kneaded and mixed at a temperature of 140°C, and a test film was obtained after the heat roll press forming. The test film was cut into a size of 10 mm x 200 mm and had a thickness of 1 mm.

### <Example 3>

A damping material sample was prepared under the same conditions as in example 2 except a cellulose fiber having an aspect ratio of 3.44 (product name: Solka Flock #40 manufactured by Imazu Chemical Co., Ltd., long axis length : 55 µm, short axis diameter: 16 µm) was used as the piezoelectric fiber made of an organic material.

### <Example 4>

A damping material sample was prepared under the same conditions as in example 2 except a cellulose fiber having an aspect ratio of 6.22 (product name: Solka Flock #10 manufactured by Imazu Chemical Co., Ltd., long axis length : 100 µm, short axis diameter: 16 µm) was used as the piezoelectric fiber made of an organic material.

### <Comparative example 3>

A damping material sample was prepared under the same conditions as in example 2 except the needle-like titanium dioxide fine particles and the piezoelectric fiber made of an organic material were not added to the above NBR/PVC.

This damping material includes 40 wt % of the conductive fine particles.

### «Loss coefficient measurement by the center exciting method»

For the samples of examples 2 to 4 and comparative example 3, the frequency dependences of the loss coefficient were measured by the center exciting method (steel plate of 10 x 200 x 0.8 mm and 12.35 g).

As a measurement system, the system configured with the oscillator of Type 2825, the amplifier of Type 2718, the vibrator of Type 4809, and the acceleration sensor of Type 8001 (all manufactured by B&K Co.) was used, and the personal computer was used to control each of the instruments.

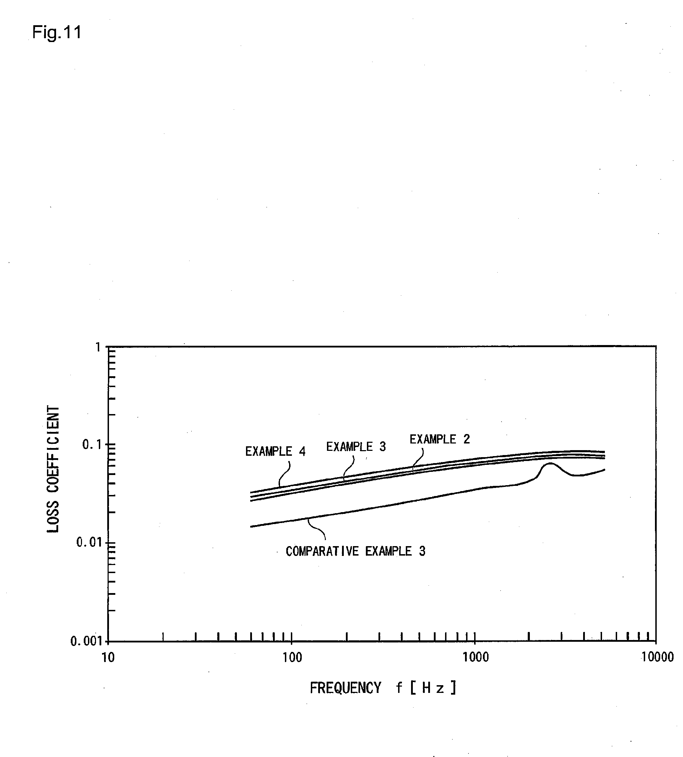

In this case, a resonant frequency was measured for the first order up to the seventh order. The result of this loss coefficient measurement is shown in FIG. 11.

### <<Evaluation>>

As is apparent from FIG. 11, the damping materials of example 2 to example 4 exhibit loss coefficients more than twice as high as that of the damping material of comparative example 3 in a low frequency range of approximately 60 Hz to approximately 500 Hz, and thereby the effect of the present invention could be demonstrated.

Further, the damping materials of example 2 to example 4 exhibit larger loss coefficients as the aspect ratio of the cellulose fiber of the piezoelectric fiber becomes larger, that is, in the order of example 4, example 3, and example 2, in the low frequency range of approximately 60 Hz to approximately 500 Hz.

Furthermore, this trend is not changed in a frequency range exceeding 500 Hz.

From this result, it is understood that larger electric energy is generated in the piezoelectric fiber by the increase of the aspect ratio in the piezoelectric fiber.

### Explanation of Reference Numerals

1. composite damping material
2. polymer material
3. needle-like dielectric having a high dielectric constant
4. piezoelectric fiber
5. flat filler
6. conductive fine particles

## Claims

1. A composite damping material, comprising:
a needle-like dielectric having a high dielectric constant;
a piezoelectric fiber made of an organic material; and
a polymer material serving as a matrix,
wherein the needle-like dielectric and the piezoelectric fiber are mixed in the polymer material.

2. A composite damping material comprising:
a needle-like dielectric having a high dielectric constant;
a piezoelectric fiber made of an organic material;
a flat filler made of an inorganic material;
conductive fine particles; and
a polymer material serving as a matrix,
wherein the needle-like dielectric, the piezoelectric fiber, the flat filler, and the conductive fine particles are mixed in the polymer material.

3. The composite damping material according to claim 1 or 2, wherein the needle-like dielectric made of titanium dioxide.

4. The composite damping material according to any one of claims 1 to 3, wherein the needle-like dielectric comprises a needle-like core made of titanium dioxide, and a conductive material layer provided on a surface of the needle-like core.

5. The composite damping material according to any one of claims 1 to 4, wherein the piezoelectric fiber is made of a cellulose fiber.
